# EUROPÄISCHE PATENTSCHRIFT

(11) **EP 2 375 266 B1**
(45) Veröffentlichungstag und Bekanntmachung des Hinweises auf die Patenterteilung: **16.05.2012**
(21) Anmeldenummer: 10159487.7
(22) Anmeldetag: 09.04.2010
(51) Int. Cl.: G01S 17/42, G01S 7/481

(54) **Optoelektronischer Sensor und Verfahren zur Absicherung**
Opto-electronic sensor and securing method
Capteur optoélectronique et procédé de sécurisation

(43) Veröffentlichungstag der Anmeldung: 12.10.2011
(73) Patentinhaber: Sick AG, 79183 Waldkirch (DE)
(72) Erfinder: Mack, Stefan, 79104 Freiburg (DE)
(74) Vertreter: Hehl, Ulrich

(56) Entgegenhaltungen:
- EP-A1- 1 411 371
- EP-A1- 1 503 221
- EP-A2- 1 329 739
- WO-A2-2005/050129
- DE-A1-102008 013 906
- DE-U1-202004 021 483

## Beschreibung

Die Erfindung betrifft einen optoelektronischen Sensor, insbesondere einen Sicherheitslaserscanner, und ein Verfahren zur Absicherung eines Gefahrenbereichs nach dem Oberbegriff von Anspruch 1 beziehungsweise 15.

Entfernungsmessende Laserscanner werden in vielen Anwendungen zur Objekterfassung eingesetzt. Ein von einem Laser erzeugter Lichtstrahl überstreicht mit Hilfe einer Ablenkeinheit periodisch einen Überwachungsbereich. Das Licht wird an Objekten in dem Überwachungsbereich remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

Laserscanner werden in der Sicherheitstechnik zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

In der Sicherheitstechnik eingesetzte Sensoren müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile, insbesondere einer Frontscheibe, und/oder Vorsehen von einzelnen Testzielen mit definierten Reflexionsgraden, die unter den entsprechenden Scanwinkeln erkannt werden müssen.

In den meisten herkömmlichen Laserscannern rotiert nur die Ablenkeinheit, während die Empfangsoptik ortsfest bleibt. Zwischen Empfangsoptik und Lichtempfänger ist ein Lichtweg mit einer Mindestlänge vorzusehen, um die gewünschte Fokussierung des Empfangslichts auf den Lichtempfänger zu erreichen. Dieser Lichtweg liegt üblicherweise längs der Drehachse, weil der Lichtempfänger so angeordnet ist, dass seine optische Achse mit der Drehachse zusammenfällt. Der Scankopf, also die Einheit aus Lichtsender, Ablenkeinheit und Lichtempfänger einschließlich der Empfangsoptik, muss deshalb in seiner Höhe prinzipbedingt zumindest etwa dreimal so groß ausgelegt sein, wie der Durchmesser der Empfängerlinse. Diese Beschränkung kann nur umgangen werden, indem der optische Strahlengang zwischen der Ablenkeinheit und der Empfangsoptik gefaltet wird. Die Strahlfaltung verursacht jedoch erhebliche Mehrkosten. Kleinere Bauformen für einen Laserscanner, vor allem in der Bauhöhe, werden somit durch die erforderlichen optischen Wege verhindert.

Die DE 10 2006 040 812 A1 verwendet anstelle eines flachen Drehspiegels und einer Empfangslinse einen außeraxialen Parabolspiegel. Dadurch gewinnt man in der Bauhöhe zwar den Anteil zwischen Ablenkeinheit und Empfangsoptik, weil hier die effektive Brennweite ab dem Rotationszentrum beginnt. Es entstehen aber vor allem im Nahbereich Probleme mit der sogenannten Kernabschattung, also einer Teilabschattung durch die Einkopplung des Sendestrahls. Zudem ist ein außeraxialer Parabolspiegel ein vergleichsweise teures Bauteil, dessen optische Aberrationen und numerische Apertur bei gegebener Brennweite und Eintrittspupille gegenüber einer refraktiven Optik ungünstiger sind.

In der EP 1 503 221 B1 ist ein zylinderförmiges Drehelement vorgesehen, welches einen Spiegel und ein Sichtfenster mit einer optischen Linse umfasst. Dieser herkömmliche Scanner erzielt aber wegen der Anordnung des Sendepfades durch die mitdrehende Linse keinen geringeren Bauraum und keine geringere Bauhöhe. Zudem wird als Antrieb ein kostenaufwändiger Hohlwellenmotor benötigt.

Aus der DE 10 2008 013 906 A1 ist ein optischer Laufzeitsensor mit Azimut- und Elevationsabtastung bekannt. Dabei werden je eine Einheit mit einem Sender und eine Einheit mit einem Empfänger einschließlich Empfangsoptik durch einen Motor in Drehbewegung versetzt. Beide Einheiten sind weitgehend unabhängig voneinander und weisen insbesondere jeweils eigene Spiegel auf, die mit den Einheiten rotieren.

Die EP 1 329 739 A2 beschreibt eine Einrichtung zur Aufnahme eines Objektraums, bei der ein Messstrahl eines Lasers über ein drehendes Spiegelprisma ausgesandt wird. Die einfallende Strahlung wird von dem Spiegelprisma auf eine nicht mit dem Spiegelprisma mitbewegte Empfangsoptik geführt. In dem Strahlengang der Empfangsoptik befinden sich zwei Strahlteiler, um so das Empfangslicht in insgesamt drei verschiedene Auswertungskanäle mit je einem Lichtempfänger abgestufter Empfindlichkeit zu lenken.

In der EP 1 411 371 A1 wird ein Beobachtungs- und Positionsmessgerät mit einem fächerförmigen Lichtstrahl offenbart. Darin ist ein auf beiden Seiten verspiegelter Drehspiegel angeordnet, der Licht auf der Vorderseite auf eine Diffusorplatte und auf der Rückseite auf eine zylindrische Fresnellinse umlenkt. Eine Entfernungsmesseinheit führt ihr Sende- und Empfangslicht über einen gemeinsamen Lichtleiter auf die Rückseite des Drehspiegels.

Die WO 2005/050129A2 offenbart eine Einrichtung zur Aufnahme eines Objektraums mit einem rotierenden Messkopf. Sendelicht wird über einen Lichtleiter und einen Spiegel auf eine Spiegelfläche eines zentralen Prismas und von dort durch eine Sendeoptik nach außen gelenkt. Ein spiegelsymmetrischer Empfangspfad führt das Empfangslicht durch eine Empfangsoptik auf eine andere Spiegelfläche des zentralen Prismas und dann über einen weiteren Spiegel in einen weiteren Lichtleiter.

Die JP 62 254 007 A offenbart eine Vorrichtung zur Positionserkennung eines beweglichen Körpers, bei dem die Empfangsoptik eine mitrotierende und eine stationäre Linse umfasst. Auch hier verhindert die Anordnung des Sendepfades eine kompakte Bauform.

Aus der EP 1 515 157 A1 ist eine optoelektronische Erfassungsvorrichtung bekannt, bei der zwei Lichtsender den Abtaststrahl außeraxial auf den Randbereich eines Drehspiegels aussenden. Eine mögliche Reduktion der Baugröße bewirkt die Anordnung nicht.

Es ist daher Aufgabe der Erfindung, einen gattungsgemäßen Sensor mit kleinerer Bauform zu ermöglichen. Insbesondere soll dabei auf eine Faltung des Strahlengangs verzichtet werden.

Diese Aufgabe wird durch einen optoelektronischen Sensor und ein Verfahren zur Absicherung eines Überwachungsbereichs gemäß Anspruch 1 beziehungsweise Anspruch 15 gelöst. Dabei geht die Erfindung von dem Grundgedanken aus, die Empfangsoptik mitzubewegen und somit den notwendigen Lichtpfad zwischen Empfangsoptik und Lichtempfänger vorzuverlagem. Dieser Empfangspfad führt bei einem herkömmlichen zentralen Einkoppeln des Sendestrahls zu einer Verstärkung der Kernabschattung, weil der Bereich der Kernabschattung einen bereits durch die Empfangsoptik verjüngten remittierten Lichtstrahl trifft. Deshalb sieht die Erfindung weiterhin vor, den Sendepfad außeraxial zu führen, so dass die optische Achse des Lichtsenders echt parallel zu der Drehachse, also gegenüber der Drehachse versetzt verläuft. Durch entsprechende Anordnung und Ausrichtung des Lichtsenders kann sowohl der Sendelichtstrahl als auch der remittierte Lichtstrahl an derselben, einheitlichen Ablenkeinheit umgelenkt werden, ohne dass eine Kernabschattung auftritt.

Die Erfindung hat den Vorteil, dass ein deutlich verkleinerter Scankopf ermöglicht wird. Durch dessen kompakte Bauform entsteht ein entsprechend kleiner Sensor. Bei deutlich reduzierter Bauhöhe kann die Größe der Empfangslinse beibehalten werden. Das ist vorteilhaft, weil für eine gegebene Lichtquelle mit maximaler optischer Ausgangsleistung und eine geforderte Detektionsreichweite eine Mindestgröße der Empfängerapertur notwendig ist.

Der Lichtsender ist bevorzugt so montiert, dass der Sendelichtstrahl ohne vorherige Umlenkung auf die Ablenkeinheit fällt. Dem Lichtsender ist meist eine strahlformende Sendeoptik zugeordnet. Abgesehen davon ist bevorzugt kein optisches Element im Strahlengang zwischen Lichtsender und Ablenkeinheit vorgesehen, sondern ein direkter Lichtweg vorgesehen. Dadurch wird der konstruktive Aufbau vereinfacht und die Baugröße weiter minimiert.

Der Lichtempfänger ist bevorzugt so angeordnet, dass seine optische Achse mit der Drehachse zusammenfällt. Auf diese Weise registriert der Lichtempfänger in zentraler, symmetrischer Anordnung den remittierten Lichtstrahl möglichst vollständig.

Auf dem Lichtweg des remittierten Lichtstrahls zwischen der Ablenkeinheit und dem Lichtempfänger sind bevorzugt keine optischen Elemente vorgesehen. Auch damit vereinfacht sich der Aufbau. Die mitbewegte Empfängeroptik sorgt allein für die Fokussierung des remittierten Lichtstrahls auf den Lichtempfänger. Alternativ ist eine zusätzliche, stationäre Empfängerlinse denkbar, die in Kombination mit der mitbewegten Empfangsoptik wirkt.

Als weitere bevorzugte Alternative zu einem gänzlich freien Strahlengang zwischen Ablenkeinheit und Lichtempfänger ist dem Lichtempfänger ein optisches Element, insbesondere ein Prisma vorgeordnet, um einen Versatz des remittierten Lichtstrahls während der Bewegung der Ablenkeinheit auszugleichen. Da die optische Achse des Lichtsenders einen Parallelversatz zu der Drehachse hat, vollführt der Sendelichtfleck auf dem Lichtempfänger eine Taumelbewegung. Die aktive Fläche des Lichtempfängers muss groß genug sein, um den remittierten Lichtstrahl dennoch in allen Winkelstellungen zu erfassen. Durch das zusätzliche optische Element kann erreicht werden, dass das Taumeln weitgehend unterdrückt ist und der remittierte Lichtstrahl zentral auftrifft.

Die Ablenkeinheit ist bevorzugt als Drehspiegel ausgebildet und die Empfangsoptik so montiert, dass sie sich mitdreht. Der Drehspiegel steht nochmals bevorzugt um 45° zu der Drehachse gekippt und lenkt somit sowohl den Sendelichtstrahl wie den remittierten Lichtstrahl um 90° um. Als Überwachungsbereich entsteht dabei eine Ebene, die auch Scanebene genannt wird.

Der optisch wirksame Bereich der Ablenkeinheit ist bevorzugt als einheitliche Reflexionsfläche ohne Öffnungen oder gegenüber der Reflexionsfläche verkippte Segmente ausgebildet. Diese einfache Gestalt wird durch die erfindungsgemäße Anordnung der Empfangsoptik und des Lichtsenders möglich. Ein solches Bauteil ist einfacher und kostengünstiger herzustellen. Außerdem geht auf diese Weise nichts von dem remittierten Lichtstrahl verloren, wie es beispielsweise herkömmlich durch Kernabschattung der Fall ist.

Vorteilhafterweise ist ein Vollachsenmotor vorgesehen, um die Ablenkeinheit und die Empfangsoptik in Drehbewegung zu versetzen. Ein kostenaufwändiger Hohlwellenmotor ist durch den erfindungsgemäßen Sendepfad nicht erforderlich.

Der Lichtsender ist bevorzugt zwischen Empfangsoptik und Ablenkeinheit mit einem Abstand zu der optischen Achse der Empfangsoptik angeordnet, der kleiner ist als die Ausdehnung der Empfangsoptik in dieser Abstandsrichtung. Etwas ausführlicher ausgedrückt kann man sich einen Körper vorstellen, der aus der Umhüllenden entsteht, wenn die Empfangsoptik längs ihrer optischen Achse zur Ablenkeinheit verschoben wird. Mit einem Abstand kleiner als die Ausdehnung der Empfangsoptik in Abstandsrichtung ist dann gemeint, dass der Lichtsender in diesen Körper eintaucht. Das stört den Lichtempfang nicht, weil der Bereich innerhalb der Umhüllenden aufgrund der fokussierenden Eigenschaften der Empfangsoptik zu einem Teil frei von remittiertem Licht bleibt und deshalb keine Abschattung erfolgt, wenn in diesem Teil Elemente angeordnet werden. Durch das Eintauchen in die Umhüllende wird eine besonders tiefe Lage des Lichtsenders und damit eine weitere Reduktion der Bauhöhe ermöglicht.

Auch der Lichtempfänger kann bevorzugt in einem Abstand zu der optischen Achse der Empfangsoptik angeordnet sein, der kleiner ist als die Ausdehnung der Empfangsoptik in dieser Abstandsrichtung. Dabei gilt hinsichtlich der Erläuterung und der Vorteile dieser Anordnung das gleiche wie für den Lichtsender.

In bevorzugter Weiterbildung der Erfindung weist der Überwachungsbereich gegenüber einer vollen 360°-Überwachung einen Totwinkelbereich auf, wobei Lichtsender und Lichtempfänger auf einer gemeinsamen Ebene senkrecht zu der Drehachse angeordnet sind. Prinzipiell kann der Sensor auch eine 360°-Abtastung erzielen. Sollen aber sowohl Lichtsender wie Lichtempfänger zur weiteren Reduktion der Bauhöhe in die oben definierte Umhüllende eintauchen, so gibt es den Totwinkelbereich, in dem der Lichtempfänger den Sendestrahl abschattet.

Die Empfangsoptik ist bevorzugt durch eine lichtdurchlässige mechanische Verbindung, insbesondere in Form einer galgenartigen Aufhängung, mit der Ablenkeinheit verbunden. Die mechanische Verbindung sollte möglichst optisch durchlässig sein, um den seitlich an der Empfangsoptik vorbei austretenden Sendelichtstrahl nicht zu stören. Dazu ist beispielsweise möglichst wenig Material vorzusehen. Eine Möglichkeit besteht darin, die Empfängerlinse analog zu einem Galgen an einer Aufhängung zu befestigen, wobei der Fuß des Galgens mit der Ablenkeinheit verbunden ist. Alternativ kann die mechanische Verbindung transparent sein. Statt die Empfangsoptik mit der Ablenkeinheit zu verbinden, kann die Verbindung auch nur mittelbar dadurch hergestellt werden, dass Empfangsoptik und Ablenkeinheit jeweils mit Antriebswelle für die Bewegung der Ablenkeinheit verbunden sind.

Die Empfangsoptik weist bevorzugt ein Ringfenster insbesondere mit einer strahlformenden oder strahlablenkenden Kontur auf. Ein planes Ringfenster dient der mechanischen Befestigung der Empfangsoptik. Mit einer zusätzlichen Kontur kann zudem Richtung und/oder Strahlprofil des Sendelichtstrahls beeinflusst werden.

Empfangsoptik und Ablenkeinheit sind bevorzugt monolithisch ausgebildet, insbesondere als ein Kunststoffteil mit einer spiegelnden Beschichtung der Ablenkeinheit. Ein solches einstückiges Bauteil kann beispielsweise aus Vollmaterial in einem einzigen Arbeitsgang für beide Elemente durch Spritzguss hergestellt werden

Eine Auswertungseinheit des Sensors ist bevorzugt dafür ausgebildet, anhand des Empfangssignals Abstands- und/oder Winkelinformationen von Objekten in dem Überwachungsbereich zu gewinnen. Mit den zweidimensionalen Positionsdaten steht eine wesentliche Information über die Objekte in dem Überwachungsbereich zur Verfügung. Der Sensor ist noch bevorzugter als sicherer Laserscanner ausgebildet und weist einen sicherer Ausgang auf, wobei die Auswertungseinheit dafür ausgebildet ist, bei Erkennen eines unzulässigen Eingriffs in ein vorgebbares Schutzfeld innerhalb des Überwachungsbereichs ein Abschaltsignal über den sicheren Ausgang auszugeben. In dieser sicherheitstechnischen Ausführung wird eine Gefahrenquelle abgesichert, wobei die besonders kompakte Bauform die Arbeitsabläufe weniger stört und zudem weniger anderweitig benötigten Platz beansprucht.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung durch eine Ausführungsform des er- findungsgemäßen Sensors;
- Fig. 2: eine Frontalansicht auf eine Empfangsoptik des Sensors gemäß Figur 1;
- Fig. 3: eine schematische Schnittdarstellung durch eine weitere Ausführungsform des erfindungsgemäßen Sensors;
- Fig. 4: eine Frontalansicht auf eine Empfangsoptik des Sensors gemäß Figur 3;
- Fig. 5: eine Schnittdarstellung einer weiteren Ausführungsform des erfindungsge- mäßen Sensors mit zusätzlichem Prisma;
- Fig. 6: eine Ausschnittsvergrößerung der Figur 5; und
- Fig. 7: eine Schnittdarstellung einer weiteren Ausführungsform des erfindungsge- mäßen Sensors mit einem konturierten Ringfenster.

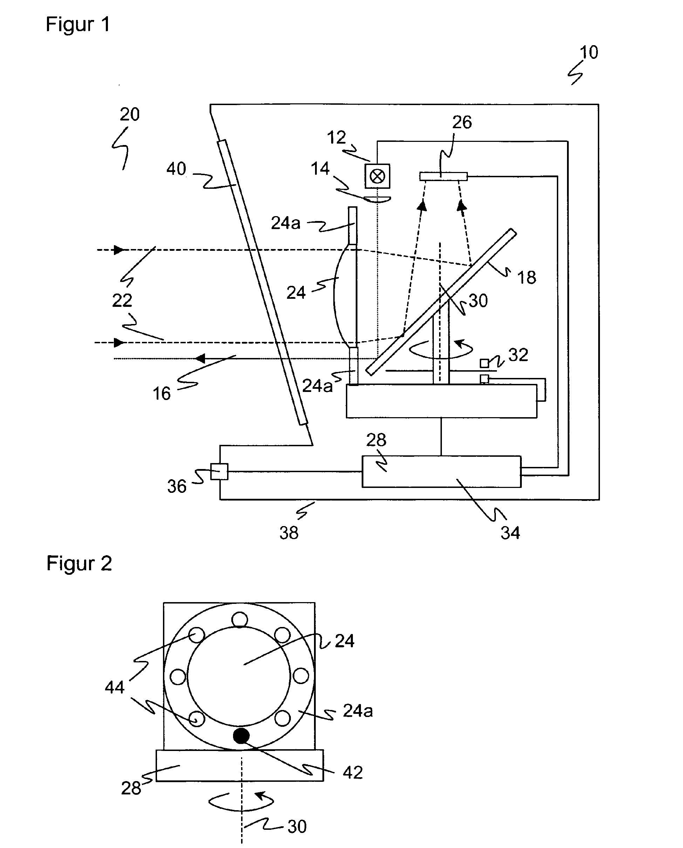

Figur 1 zeigt eine schematische Schnittdarstellung durch einen erfindungsgemäßen Sensor 10, der als Scanner ausgebildet ist. Ein Lichtsender 12, beispielsweise ein Laser, erzeugt mittels einer Sendeoptik 14 einen Sendelichtstrahl 16, der einzelne Lichtimpulse aufweist. Der Sendelichtstrahl 16 wird über eine Ablenkeinheit 18 in einen Überwachungsbereich 20 gelenkt und dort von einem gegebenenfalls vorhandenen Objekt remittiert. Das remittierte Licht 22 gelangt wieder zu dem Sensor 10 zurück, tritt durch eine Empfangsoptik 24 und wird anschließend über die Ablenkeinheit 18 einem Lichtempfänger 26, beispielsweise einer Photodiode, zugeführt und dort detektiert.

Die Lichtablenkeinheit 18 ist als Drehspiegel ausgestaltet, die durch Antrieb eines Motors 28 kontinuierlich um eine Drehachse 30 rotiert. Die Empfangsoptik 24 weist zusätzlich zu der optisch wirksamen Fläche, beispielsweise einer Sammellinse, ein umlaufendes Ringfenster 24a auf, mit dem sie mit dem Antrieb des Motors 28 verbunden ist und so die Drehbewegung mitvollzieht. Der Sendelichtstrahl 16 wird von dem Lichtsender 12 gegenüber der Drehachse außeraxial versetzt ausgesandt und kann deshalb exzentrisch an der Empfangsoptik 24 vorbei durch das Ringfenster 24a austreten.

Die jeweilige Winkelstellung wird über einen Encoder 32 erfasst. Der Sendelichtstrahl 16 überstreicht somit den durch die Rotationsbewegung erzeugten Überwachungsbereich 20. Anhand des Empfangssignals des Lichtempfängers 26 kann aus der Winkelstellung der Ablenkeinheit 18 mittels des Encoders 32 auf die Winkellage erfasster Objekte in dem Überwachungsbereich 20 geschlossen werden.

Zusätzlich wird die Laufzeit der einzelnen Laserlichtpulse von ihrem Aussenden bis zu dem Empfang nach Reflexion an dem Objekt in dem Überwachungsbereich 20 ermittelt. Aus der Lichtlaufzeit wird unter Verwendung der Lichtgeschwindigkeit auf die Entfernung des Objektes von dem Sensor 10 geschlossen. Diese Auswertung erfolgt in einer Auswerteeinheit 34, die dafür mit dem Lichtsender 12, dem Lichtempfänger 26, dem Motor 28 und zumindest mittelbar auch mit dem Encoder 32 verbunden ist. Somit stehen über den Winkel und die Entfernung zweidimensionale Polarkoordinaten aller Objekte in dem Überwachungsbereich 20 zur Verfügung.

In einer sicherheitstechnischen Anwendung, in welcher der Sensor 10 als Sicherheitslaserscanner ausgebildet ist, wird die Position der Objekte bestimmt, um ein Sicherheitssignal an einem Sicherheitsausgang 36 (OSSD, Output Signal Switching Device) bereitzustellen. Das Sicherheitssignal löst beispielsweise einen Nothalt einer angeschlossenen und von dem Sensor 10 überwachten Maschine aus. Die Auswertungseinheit 34 vergleicht dazu die Objektpositionen mit einem oder mehreren zweidimensionalen Schutzfeldern, deren Geometrie der Auswertungseinheit 34 durch entsprechende Parameter vorgegeben oder konfiguriert ist. Damit erkennt die Auswertungseinheit 34, ob ein Schutzfeld verletzt ist, also ob sich ein unzulässiges Objekt darin befindet, und schaltet je nach Ergebnis den Sicherheitsausgang 36.

Alle genannten Funktionskomponenten sind in einem Gehäuse 38 angeordnet, das im Bereich des Lichtaus- und Lichteintritts eine Frontscheibe 40 aufweist. Die Frontscheibe 40 ist zur Vermeidung von direkten Reflexionen in den Lichtempfänger 26 schräg gestellt, so dass Sendelichtstrahl 16 und Frontscheibe 40 einen Winkel ungleich neunzig Grad einschließen.

Indem die Empfangsoptik 24 sich mit der Ablenkeinheit 18 mitdreht, wirkt sie schon strahlformend auf den remittierten Lichtstrahl 22, eher dieser auf die Ablenkeinheit 18 trifft. Dadurch kann der Lichtempfänger 26 bei gleicher effektiver Brennweite wesentlich tiefer angeordnet werden als bei einer der Ablenkeinheit nachgeordneten Empfangsoptik 24. Der Scankopf benötig so nur etwa die halbe Bauhöhe.

Die außeraxial zu der Drehachse 30 parallelversetzt angeordnete Strahlachse oder optische Achse des Lichtsenders 12 ermöglicht, den Lichtempfänger 26 und den Lichtsender 12 nebeneinander und auf derselben Seite des Motors 32 anzuordnen. Dadurch kann ein normaler Vollachsenmotor anstelle eines Hohlwellenantriebs verwendet werden.

Figur 2 illustriert in einer Frontalansicht der Empfangsoptik 24 die Austrittsposition des Sendelichtstrahls 16 mit der Drehbewegung. Ein schwarzer Sendelichtfleck 42 entspricht der Situation der Figur 1 bei einer als 0° bezeichneten Drehposition der Ablenkeinheit 18, bei welcher der Sendelichtstrahl 16 unten austritt. Die weißen Sendelichtflecken 44 entsprechen jeweils einer weiteren Drehung um 45°. Der Sendelichtstrahl 16 umläuft in dieser Weise die Empfangsoptik 24 einmal mit jeder Drehung der Ablenkeinheit 18. Der Versatz zwischen Sendelichtstrahl 16 und remittiertem Lichtstrahl 22 ist klein genug, dass er im Rahmen der geforderten Auflösung des Sensors 10 keine Rolle spielt oder von dem Öffnungswinkel der Empfangsoptik 24 kompensiert wird. Letztlich hat durch den umlaufenden Sendelichtstrahl 16 allenfalls die Ebene des Überwachungsbereichs 20 einen geringen winkelabhängigen Höhenversatz in der Größenordnung des Durchmessers der Empfangsoptik 24.

Damit die Empfangsoptik 24 mit der Ablenkeinheit 18 rotiert, kann wie in Figur 1 die Empfangsoptik 24 mit einer Welle des Motors 28 verbunden sein. Denkbar sind dabei zusätzliche Elemente auf der Welle zum Ausgleich einer Unwucht. Die Empfangsoptik 24 kann aber ebenso mit der Ablenkeinheit 18 verbunden werden. Alternativ zu einem planen transparenten Rand, wie dem Ringfenster 24a, weist die Empfangsoptik 24 eine andere mechanische Halterung auf, die aber im Bereich des Strahlengangs von Sendelichtstrahl 16 und remittiertem Lichtstrahl 22 ein möglichst kleines optisches Hindernis bietet. Dazu kann beispielsweise die Empfangsoptik 24 mit einer galgenartigen Konstruktion mit der Ablenkeinheit 18 verbunden werden, so dass der Sendelichtstrahl 16 komplett als Freiraumoptik ausgelegt ist. Möglich ist weiterhin, den Verbund aus Empfangsoptik 24 und Ablenkeinheit 18 monolithisch aus Vollmaterial auszugestalten, beispielsweise aus Kunststoff mit einer außen aufgebrachten Verspiegelungsschicht.

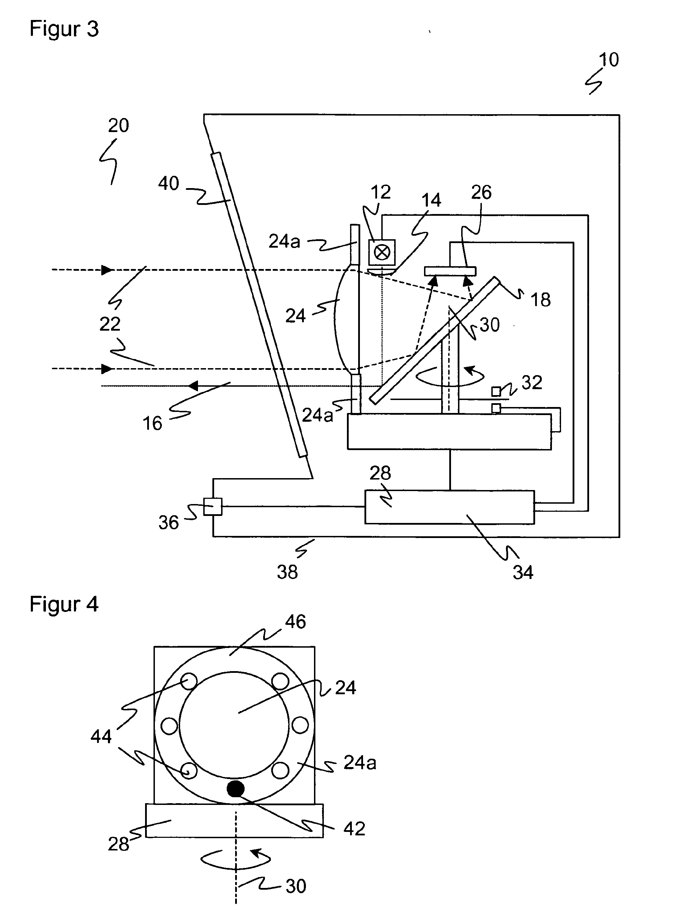

Figur 3 stellt eine weitere Ausführungsform der Erfindung dar. Dabei bezeichnen weiterhin gleiche Bezugszeichen die gleichen Merkmale. Diese Ausführungsform unterscheidet sich von der Ausführungsform gemäß Figur 1 in der Höhe, in der Lichtsender 12 und Lichtempfänger 26 angeordnet sind. Ein Vergleich der Figuren 1 und 3 zeigt, dass dadurch weitere Bauhöhe eingespart werden kann, auch wenn in der Darstellung der Figur 3 der gewonnene Bauraum noch nicht für eine kleinere Gehäuseform ausgenutzt ist.

Da nämlich der Strahlengang des remittierten Lichtstrahls 22 nach der Empfangsoptik 24 konvergent ist, können Lichtsender 12 und Lichtempfänger 26 in den Raum zwischen Empfangsoptik 24 und Ablenkeinheit 18 eintauchen. Bei einem parallelen Strahlengang bis zu der Ablenkeinheit 18, wie dies ohne die Empfangsoptik 24 der Fall wäre, würden Abschattungen verursacht, so dass dieser Raum ungenutzt bleiben müsste. Die Ablenkeinheit 18 ist gegenüber der Figur 1 im oberen Teil verkürzt, um bei Verdrehung um 180° eine Kollision mit dem Lichtsender 12 zu verhindern.

Figur 4 illustriert analog der Figur 2 den die Empfangsoptik 24 umlaufenden Sendelichtstrahl 16. Der einzige Unterschied besteht in einem Totwinkelbereich 46 um einen Drehwinkel von 180°, wo kein Sendelichtfleck gezeigt ist. Bei diesem Winkel wird der Sendelichtstrahl 16 von dem Lichtempfänger 26 abgeschattet und so am Austritt gehindert. Deshalb ist bei der Ausführungsform gemäß Figur 3 der Sichtwinkel etwas eingeschränkt und kann beispielsweise 270° oder auch mehr betragen. Für eine vollständige 360°-Überwachung muss zumindest der Lichtempfänger 26 wie etwa in Figur 1 gezeigt oberhalb angeordnet sein.

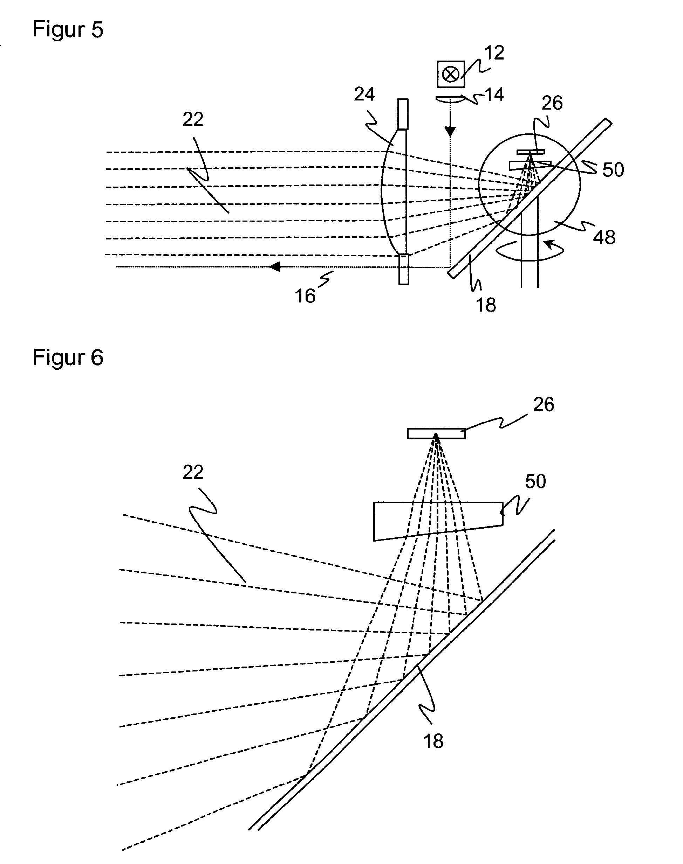

Figur 5 zeigt in einer Schnittdarstellung die wesentlichen optischen Bestandteile einer weiteren Ausführungsform des Sensors 10. Figur 6 zeigt den mit einem Kreis 48 markierten Ausschnitt nochmals vergrößert, um den Strahlengang zu verdeutlichen. Zusätzlich zu den zuvor beschriebenen Ausführungsformen ist hier ein der Empfangsoptik 26 vorgeordnetes Prisma 50 vorgesehen. Denn wie in den Figuren 2 und 4 illustriert, bewirkt der Parallelversatz des Sendelichtstrahls 16 gegenüber der optischen Achse der Empfangsoptik 24 eine Kreisbewegung der Austrittsposition des Sendelichtstrahls 16 um diese optische Achse. Dies führt zu einer Art Taumelbewegung des Empfangslichtflecks auf dem Lichtempfänger 26 während der Drehbewegung der Ablenkeinheit 18. Je nach Auslegung der Empfangsoptik 24 kann dies nachteilig sein, weil die aktive Fläche des Lichtempfängers größer sein muss als der Durchmesser dieses Taumelkreises.

Das Prisma 50 gleicht diesen Nachteil aus. Das Prisma hat die Funktion, die Strahlen des remittierten Lichts 22 nach der Empfangsoptik 24 so abzulenken, dass das Bild des Sendelichtflecks unabhängig von der Drehstellung der Ablenkeinheit 18 mittig auf dem Lichtempfänger 26 liegt. Dadurch wird das Taumeln des Empfangslichtflecks zumindest weitgehend oder sogar vollständig unterdrückt.

Wie am besten in Figur 6 zu erkennen, würde in der beispielhaft dargestellten Drehstellung der Ablenkeinheit 18 der Sendelichtfleck nach rechts versetzt auf dem Lichtempfänger 26 abgebildet. Das Prisma 50 lenkt die Empfangsstrahlen des remittierten Lichts 22 in die Gegenrichtung ab, so dass der Empfangslichtfleck wieder mittig auf dem Lichtempfänger 26 zu liegen kommt. Da das Prisma 50 ortsfest zu dem Lichtempfänger 26 angeordnet ist, funktioniert diese Korrektur unabhängig von der Scanrichtung.

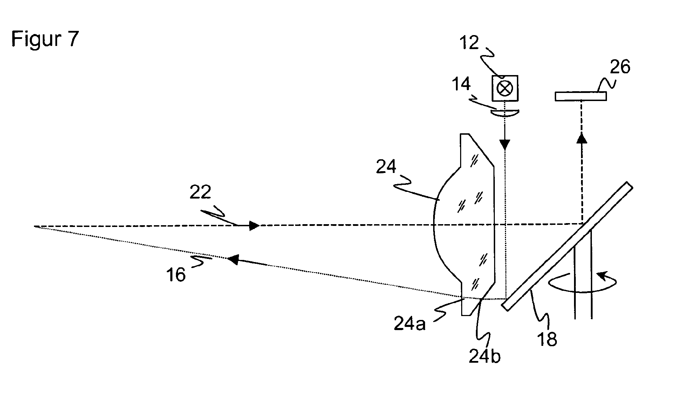

Figur 7 zeigt in einer Schnittdarstellung die wesentlichen optischen Bestandteile einer weiteren Ausführungsform des Sensors 10. Im Gegensatz zu den vorherigen Darstellungen ist das Ringfenster 24a nicht plan, sondern weist eine Kontur 24b auf, die eine strahlformende Wirkung auf den Sendelichtstrahl 16 hat. In dem dargestellten Beispiel hat das Ringfenster 24a einen prismatischen Querschnitt, mit dem der Sendelichtstrahl 16 zu der optischen Achse der Empfangsoptik 24 hin abgelenkt wird. Diese Ablenkung zieht auch eine Verformung des Sendelichtflecks nach sich, denn der Sendelichtstrahl 16 hat nun statt eines kreisförmigen einen der Ablenkung entsprechenden elliptischen Querschnitt. Eine prismatische Kontur 24b des Ringfensters 24a ist nur beispielhaft. Es sind andere strahlformende Konturen denkbar, etwa zu Fokussierung oder Aufstreuung, zur Veränderung des Strahlquerschnitts oder zur Richtungsablenkung.

## Patentansprüche

1. Optoelektronischer Sensor (10), insbesondere Laserscanner, zur Absicherung eines Überwachungsbereichs (20), mit einem Lichtsender (12) zum Aussenden eines Sendelichtstrahls (16), einer um eine Drehachse (30) beweglichen Ablenkeinheit (18) zur periodischen Ablenkung des Sendelichtstrahls (16) in dem Überwachungsbereich (20), einem Lichtempfänger (26) zum Erzeugen eines Empfangssignals aus dem von Objekten in dem Überwachungsbereich (20) remittierten Lichtstrahl (22) und einer der Ablenkeinheit (18) vorgeordneten Empfangsoptik (24), die so montiert ist, dass sie mit der Ablenkeinheit (18) mitbewegbar ist,
**dadurch gekennzeichnet,**
**dass** der Lichtsender (12) so angeordnet ist, dass seine optische Achse parallel zu der Drehachse (30) verläuft, so dass der Sendelichtstrahl (16) gegenüber der Drehachse (30) außeraxial parallelversetzt ist und exzentrisch an der Empfangsoptik (24) vorbei aus dem Sensor (10) austritt, und dass sowohl der Sendelichtstrahl (16) als auch der remittierte Lichtstrahl (22) an derselben Fläche derselben Ablenkeinheit (18) umgelenkt werden.

2. Sensor (10) nach Anspruch 1,
wobei der Lichtsender (12) so montiert ist, dass der Sendelichtstrahl (16) ohne vorherige Umlenkung auf die Ablenkeinheit (18) fällt.

3. Sensor (10) nach Anspruch 1 oder 2,
wobei der Lichtempfänger (26) so angeordnet ist, dass seine optische Achse mit der Drehachse (30) zusammenfällt.

4. Sensor (10) nach einem der vorhergehenden Ansprüche,
wobei auf dem Lichtweg des remittierten Lichtstrahls (22) zwischen der Ablenkeinheit (18) und dem Lichtempfänger (26) keine optischen Elemente vorgesehen sind.

5. Sensor (10) nach einem der Ansprüche 1 bis 3,
wobei dem Lichtempfänger (26) ein optisches Element (50), insbesondere ein Prisma vorgeordnet ist, um einen Versatz des remittierten Lichtstrahls (22) während der Bewegung der Ablenkeinheit (18) auszugleichen.

6. Sensor (10) nach einem der vorhergehenden Ansprüche,
wobei die Ablenkeinheit (18) als Drehspiegel ausgebildet und die Empfangsoptik (24) so montiert ist, dass sie sich mitdreht.

7. Sensor (10) nach einem der vorhergehenden Ansprüche,
wobei der optisch wirksame Bereich der Ablenkeinheit (18) als einheitliche Reflexionsfläche ohne Öffnungen oder gegenüber der Reflexionsfläche verkippte Segmente ausgebildet ist.

8. Sensor (10) nach einem der vorhergehenden Ansprüche,
wobei ein Vollachsenmotor (28) vorgesehen ist, um die Ablenkeinheit (18) und die Empfangsoptik (24) in Drehbewegung zu versetzen.

9. Sensor (10) nach einem der vorhergehenden Ansprüche,
wobei der Lichtsender (12) zwischen Empfangsoptik (24) und Ablenkeinheit (18) mit einem Abstand zu der optischen Achse der Empfangsoptik (24) angeordnet ist, der kleiner ist als die Ausdehnung der Empfangsoptik (24) in dieser Abstandsrichtung und/oder wobei der Lichtempfänger (24) in einem Abstand zu der optischen Achse der Empfangsoptik (24) angeordnet ist, der kleiner ist als die Ausdehnung der Empfangsoptik (24) in dieser Abstandsrichtung.

10. Sensor (10) nach einem der vorhergehenden Ansprüche,
wobei der Überwachungsbereich (20) gegenüber einer vollen 360°-Überwachung einen Totwinkelbereich (46) aufweist, und wobei Lichtsender (12) und Lichtempfänger (26) auf einer gemeinsamen Ebene senkrecht zu der Drehachse (30) angeordnet sind.

11. Sensor (10) nach einem der vorhergehenden Ansprüche,
wobei die Empfangsoptik (24) durch eine lichtdurchlässige mechanische Verbindung (24a), insbesondere in Form einer galgenartigen Aufhängung, mit der Ablenkeinheit (18) verbunden ist.

12. Sensor (10) nach einem der Ansprüche 1 bis 11,
wobei die Empfangsoptik (24) ein Ringfenster (24a) insbesondere mit einer strahlformenden oder strahlablenkenden Kontur (24b) aufweist.

13. Sensor (10) nach einem der vorhergehenden Ansprüche,
wobei die Empfangsoptik (24) und die Ablenkeinheit (18) monolithisch ausgebildet sind, insbesondere als ein Kunststoffteil mit einer spiegelnden Beschichtung der Ablenkeinheit (18).

14. Sensor (10) nach einem der vorhergehenden Ansprüche,
wobei eine Auswertungseinheit (34) des Sensors (10) dafür ausgebildet ist, anhand des Empfangssignals Abstands- und/oder Winkelinformationen von Objekten in dem Überwachungsbereich (20) zu gewinnen, wobei der Sensor (10) insbesondere als sicherer Laserscanner ausgebildet ist, der einen sicheren Ausgang (36) aufweist und dessen Auswertungseinheit (34) dafür ausgebildet ist, bei Erkennen eines unzulässigen Eingriffs in ein vorgebbares Schutzfeld innerhalb des Überwachungsbereichs (20) ein Abschaltsignal über den sicheren Ausgang (36) auszugeben.

15. Verfahren zur Absicherung eines Überwachungsbereichs (20), bei dem ein Sendelichtstrahl (16) mittels einer um eine Drehachse (30) beweglichen Ablenkeinheit (18) den Überwachungsbereich (20) periodisch abtastet, aus dem von Objekten in dem Überwachungsbereich (20) remittierten Lichtstrahl (22) ein Empfangssignal erzeugt und eine der Ablenkeinheit (18) vorgeordnete Empfangsoptik (24) mit der Ablenkeinheit (18) mitbewegt wird,
**dadurch gekennzeichnet,**
**dass** der Sendelichtstrahl (16) parallelversetzt zu der Drehachse (30) erzeugt wird und exzentrisch an der Empfangsoptik (24) vorbei ausgesandt wird, und dass sowohl der Sendelichtstrahl (16) als auch der remittierte Lichtstrahl (22) an derselben Fläche derselben Ablenkeinheit (18) umgelenkt werden.

## Claims

1. An optoelectronic sensor (10), in particular a laser scanner, for the protection of a monitored area (20), the sensor (10) having a light transmitter (12) for transmitting a transmission light beam (16), a deflection unit (18) rotatable about a rotation axis (30) for periodically deflecting the transmission light beam (16) in the monitored area (20), a light receiver (26) for generating a reception signal from the reflected light beam (22) reflected from objects in the monitored area (20), and reception optics (24) arranged in front of the deflection unit (18) which is mounted so that it is movable together with the deflection unit (18),
**characterized in that**
the light transmitter (12) is arranged so that its optical axis runs parallel to the rotation axis (30) so that the transmission light beam (16) has an off-axis parallel offset with respect to the rotation axis (30) and transmits out of the sensor (10) eccentrically past the reception optics (24), and **in that** both the transmission light beam (16) and the remitted light beam (22) are deflected at the same surface of the same deflection unit (18).

2. The sensor (10) according to claim 1,
wherein the light transmitter (12) is mounted so that the transmission light beam (16) impinges on the deflection unit (18) without prior deflection.

3. The sensor (10) according to claim 1 or 2,
wherein the light receiver (26) is arranged so that its optical axis matches the rotation axis (30).

4. The sensor (10) according to any of the preceding claims,
wherein on the light path of the remitted light beam (22) no optical elements are provided between the deflection unit (18) and the light receiver (26).

5. The sensor (10) according to any of claims 1 to 3,
wherein an optical element (50) is arranged in front of the light receiver (26), in particular a prism, in order to compensate an offset of the remitted light beam (22) during movement of the deflection unit (18).

6. The sensor (10) according to any of the preceding claims,
wherein the deflection unit (18) is made as a rotating mirror and the reception optics (24) is mounted so that it rotates with the mirror.

7. The sensor (10) according to any of the preceding claims,
wherein the optical effective area of the deflection unit (18) is made as a homogenous reflecting surface without openings or segments that are skewed with respect to the reflecting surface.

8. The sensor (10) according to any of the preceding claims,
wherein a massive axis motor (28) is used to rotate the deflection unit (18) and the reception optics (24).

9. The sensor (10) according to any of the preceding claims,
wherein the light transmitter (12) is arranged between reception optics (24) and deflection unit (18) with a distance to the optical axis of the reception optics (24) that is smaller than the extension of the reception optics in this distance direction, and/or wherein the light receiver (26) is arranged in a distance to the optical axis of the reception optics (24) that is smaller than the extension of the reception optics (24) in this distance direction.

10. The sensor (10) according to any of the preceding claims,
wherein the monitored area (20) has a dead angle area (46) as compared to a complete 360° monitoring, and wherein light transmitter (12) and light receiver (26) are arranged on a common plane transverse to the rotation axis (30).

11. The sensor (10) according to any of the preceding claims,
wherein the reception optics (24) are connected to the deflection unit (18) with a transparent mechanical connection (24a), in particular with a gallows-like suspension.

12. The sensor (10) according to any of claims 1 to 11,
wherein the reception optics (24) comprises a ring window (24a), in particular having a beam shaping or beam deflecting contour (24b).

13. The sensor (10) according to any of the preceding claims,
wherein the reception optics (24) and the deflection unit (18) are made mono-lithically, in particular as a plastic part with a reflective coating of the deflection unit (18).

14. The sensor (10) according to any of the preceding claims,
wherein an evaluation unit (34) of the sensor (10) is configured to generate distance and/or angle information of objects in the monitored area (20) based on the reception signal, wherein in particular the sensor (10) is made as a safe laser scanner having a safe output (36) and whose evaluation unit (34) is configured to output a shutdown signal on the safe output (36) upon detection of a forbidden intrusion into a configurable protected zone within the monitored area (20).

15. A method for the protection of a monitored area (20), wherein a transmission light beam (16) periodically scans the monitored area (20) by means of a deflection unit (18) movable about a rotation axis (30), a reception signal is generated from a remitted light beam (22) remitted from objects in the monitored area (20) and reception optics (24) arranged in front of the deflection unit (18) are moved with the deflection unit (18),
**characterized in that**
the transmission light beam (16) is generated with a parallel offset to the rotation axis (30) and is transmitted eccentrically past the reception optics (24), and **in that** both the transmission light beam (16) and the remitted light beam (22) are deflected on the same surface of the same deflection unit (18).

## Revendications

1. Capteur optoélectronique (10), en particulier un scanner laser pour la protection d'une zone surveillée (20), le capteur (10) ayant un émetteur de lumière (12) pour émettre un faisceau lumineux de transmission (16), une unité de déviation (18) tournant autour d'un axe de rotation (30) pour dévier périodiquement le faisceau lumineux de transmission (16) dans la zone surveillée (20), un récepteur de lumière (26) pour générer un signal de réception du faisceau lumineux (22) reflété par des objets dans la zone surveillée (20), et un optique de réception (24) est disposé devant l'unité de déviation (18) qui est monté de sorte qu'il est mobile avec le dispositif de déviation (18), **caractérisé en ce que** l'émetteur de lumière (12) est disposé de manière que son axe optique est parallèle à l'axe de rotation (30) de sorte que le faisceau lumineux de transmission (16) est décalé parallèlement hors-axe par rapport à l'axe de rotation (30) et le faisceau lumineux de transmission sort du capteur (10) à côté de l'optique de réception (24) de façon excentrique, et **en ce que** le faisceau lumineux de transmission (16) et le faisceau lumineux reflété (22) sont déviés à la même surface de la même unité de déflexion (18).

2. Capteur (10) selon la revendication 1, **caractérisé en ce que** l'émetteur de lumière (12) est monté de telle sorte que le faisceau lumineux de transmission (16) irradie sur le dispositif de déviation (18) sans déformation préalable.

3. Capteur (10) selon la revendication 1 ou 2, **caractérisé en ce que** le récepteur de lumière (26) est disposé de manière que son axe optique correspond à l'axe de rotation (30).

4. Capteur (10) selon l'une des revendications précédentes, **caractérisé en ce que** sur le trajet de la lumière du faisceau lumineux reflété (22) pas d'éléments optiques ne sont pas prévus entre l'unité de déviation (18) et le récepteur de lumière (26).

5. Capteur (10) selon l'une des revendications 1 à 3, **caractérisé en ce qu'**un élément optique (50) est disposé devant le récepteur de lumière (26), en particulier un prisme, afin de compenser un décalage du faisceau lumineux reflété (22) lors du mouvement de l'unité de déviation (18).

6. Capteur (10) selon l'une des revendications précédentes, **caractérisé en ce que** le dispositif de déviation (18) est formé comme un miroir rotatif et l'optique de réception (24) est monté de sorte qu'il tourne avec le miroir.

7. Capteur (10) selon l'une des revendications précédentes, **caractérisé en ce que** la zone optiquement effective de l'unité de déviation (18) est formée comme une surface homogène reflétant sans ouvertures ou des segments qui sont obliques par rapport à la surface réfléchissante.

8. Capteur (10) selon l'une des revendications précédentes, **caractérisé en ce qu'**un moteur d'axe massifs (28) est utilisé pour faire pivoter le dispositif de déviation (18) et l'optique de réception (24).

9. Capteur (10) selon l'une des revendications précédentes, **caractérisé en ce que** l'émetteur de lumière (12) est disposé entre l'optique de réception (24) et l'unité de déviation (18) avec une distance à l'axe optique de l'optique de réception (24) qui est plus petite que l'extension de l'optique de réception dans cette direction de distance, et/ou **en ce que** le récepteur de lumière (26) est disposé dans une distance à l'axe optique de l'optique de réception (24) qui est plus petite que l'extension de l'optique de réception (24) dans cette direction de distance.

10. Capteur (10) selon l'une des revendications précédentes, **caractérisé en ce que** la zone surveillée (20) a une région d'angle mort (46) par rapport à une surveillance complète à 360°, et l'émetteur de lumière (12) et le récepteur de lumière (26) sont disposés sur un même plan transversal à l'axe de rotation (30).

11. Capteur (10) selon l'une des revendications précédentes, **caractérisé en ce que** l'optique de réception (24) est connecté à l'unité de déviation (18) avec une connexion transparente et mécanique (24a), en particulier avec une suspension de type potence.

12. Capteur (10) selon l'une des revendications 1 à 11, **caractérisé en ce que** l'optique de réception (24) comprend une fenêtre anneau (24a), en particulier avec un contour (24b) qui forme ou dévier des faisceaux.

13. Capteur (10) selon l'une des revendications précédentes, **caractérisé en ce que** l'optique de réception (24) et l'unité de déviation (18) sont faites de manière monolithique, en particulier comme une pièce en plastique avec un revêtement réfléchissant de l'unité de déviation (18).

14. Capteur (10) selon l'une des revendications précédentes, **caractérisé en ce qu'**une unité d'évaluation (34) du capteur (10) est configurée pour générer la distance et/ou l'information d'angle d'objets dans la zone surveillée (20) basé sur le signal de réception, dont en particulier le capteur (10) est conçu comme laser scanner de sécurité ayant une sortie de sécurité (36) et dont l'unité d'évaluation (34) est configurée pour émettre un signal d'arrêt sur la sortie de sécurité (36) lors de la détection d'une intrusion dans une zone interdite configurable protégée dans la zone surveillée (20).

15. Procédé pour la protection d'une zone surveillée (20) dans lequel un faisceau lumineux de transmission (16) régulièrement scanne la zone surveillée (20) par une unité de déviation (18) mobile autour d'un axe de rotation (30), un signal de réception est généré à partir d'un faisceau lumineux reflété (22) remis par les objets dans la zone surveillée (20) et l'optique de réception (24) disposé devant l'unité de déviation (18) est bougé avec l'unité de déviation (18), **caractérisé en ce que** le faisceau lumineux de transmission (16) est généré avec un décalage parallèle à l'axe de rotation (30) et est transmis excentriquement à côté de l'optique de réception (24), et **en ce que** le faisceau lumineux de transmission (16) et le faisceau lumineux reflété (22) sont déviés à la même surface de la même unité de déflexion (18).
